Europäisches Patentamt

(19) European Patent Office

Office européen des brevets

(11) EP 1 583 058 A1

(12) **DEMANDE DE BREVET EUROPEEN**

(43) Date de publication:
**05.10.2005 Bulletin 2005/40**

(51) Int Cl.⁷: **G08G 1/0967**, G01S 13/60, G01B 11/04

(21) Numéro de dépôt: **05300225.9**

(22) Date de dépôt: **29.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **30.03.2004 FR 0450620**

(71) Demandeurs:
 • **Gautreau, André Bernard Jacques**
 **46100 Figeac (FR)**
 • **Piedon, Brigitte**
 **31100 Toulouse (FR)**

(72) Inventeurs:
 • **Gautreau, André Bernard Jacques**
 **46100 Figeac (FR)**
 • **Piedon, Brigitte**
 **31100 Toulouse (FR)**

(74) Mandataire: **Fantin, Laurent et al**
 **Société AQUINOV**
 **12, rue Condorcet**
 **33150 Cenon (FR)**

(54) **Procédé de signalisation et de lécture d'informations destinées à un véhicule, et dispositifs pour sa mise en oeuvre**

(57) L'objet de l'invention est un procédé de signalisation et de lecture d'au moins une information destinée à un véhicule circulant sur une voie au niveau de laquelle sont rapportées au moins deux marques (C1, C2) dont l'écartement D est fonction d'une information à transmettre au véhicule caractérisé en ce qu'il comprend les étapes suivantes :

- déterminer la durée T entre le temps de passage au dessus d'une des marques de deux points (L1, L2) solidaires du véhicule séparés d'une distance d selon le sens d'avancement du véhicule,

- calculer la vitesse Vr du véhicule, Vr étant égale à d/T,

- déterminer la durée T entre le temps de passage au dessus de la première marque et le temps de passage au dessus de la seconde marque d'un point solidaire du véhicule,

- déterminer l'information transmise en calculant D=Vr x T .

Fig. 3

EP 1 583 058 A1

**Description**

La présente invention se rapporte à un procédé de signalisation et de lecture d'informations destinées à un véhicule, notamment une vitesse limite autorisée ainsi qu'à des dispositifs pour sa mise en oeuvre.

Lors de la conduite, l'automobiliste est soumis en permanence à de nombreuses informations de différentes formes et provenant de différentes sources. Ces disparités rendent difficile l'analyse de toutes ces informations, notamment celles provenant des panneaux routiers qui sont disposés sur les bas côtés et peuvent être confondus avec l'environnement ou masqués par un obstacle. De plus, le caractère ponctuel et fugitif de ces informations rend leur perception et leur mémorisation aléatoire.

Or, le respect des vitesses autorisées affichées sur lesdits panneaux routiers est considéré comme une priorité de la sécurité routière.

Aussi, de nombreux dispositifs ont été développés pour informer l'automobiliste du changement de limitation de vitesse ou de toutes autres informations routières.

Un premier mode de réalisation prévoit la mise en place de balises sur le bord de la chaussée susceptibles de transmettre une onde représentative de l'information routière à transmettre, et au niveau des véhicules, un récepteur susceptible de recueillir l'onde émise par la balise et des moyens d'analyse et d'affichage de l'information. Ce premier mode de réalisation demande une infrastructure lourde à mettre en oeuvre, nécessitant une multitude d'éléments actifs qu'il convient d'installer et d'entretenir.

Une deuxième solution consiste à installer au niveau de la chaussée des éléments passifs sous forme d'un code à barres représentatif de l'information routière à transmettre et à prévoir au niveau du véhicule un lecteur susceptible de lire le code à barres et des moyens d'analyse et d'affichage de l'information.

Cette solution nécessite une écriture précise qui la rend complexe à réaliser, et se traduit par un visuel chargé et agressif. Par ailleurs, la transmission d'une information fidèle par le biais d'un code à barres nécessite une précision élevée au niveau du contour des marques formant le code à barres. Or, ces marques sont apposées généralement sur la chaussée et soumises à l'usure générée par le roulage si bien que la précision du code à barres risque de se dégrader rapidement et d'engendrer une lecture des informations erronée.

De plus, dans le cas d'une signalisation de limitation de vitesse, il est souhaitable de comparer la vitesse réelle du véhicule à l'information lue afin de disposer d'une gamme de moyens d'information et d'alerte à l'encontre du conducteur. Selon cette solution, cette comparaison ne peut s'obtenir que par la mise en oeuvre d'une prise tachymétrique.

Une autre solution consiste à combiner un dispositif de localisation par satellite avec une banque de données embarquées de manière à afficher les informations routières stockées dans la base de données en fonction de la position du véhicule. Comme précédemment, cette solution n'est pas satisfaisante car elle nécessite une infrastructure lourde et demande la saisie et la mise à jour des bases de données embarquées.

Enfin, une dernière solution est décrite dans la demande de brevet FR-2.307.272. Elle prévoit deux barrières magnétiques, disposées au niveau de la chaussée, écartées l'une de l'autre d'une distance fonction de la vitesse limite autorisée et un capteur disposé au niveau du véhicule susceptible de détecter les barrières et d'émettre à leur passage une impulsion électrique. Selon une première variante, un avertissement est émis si le temps entre les deux impulsions est inférieur au temps d'ouverture d'une porte électronique, ladite durée d'ouverture étant proportionnelle à la vitesse limite autorisée. Cette solution a pour inconvénient d'être conçue pour une valeur de limitation de vitesse correspondant à la durée d'ouverture de la porte électronique et de ne prévenir que si la vitesse est supérieure à celle autorisée.

Selon une variante, la durée entre deux impulsions est corrélée avec la vitesse instantanée du véhicule donnée par une prise tachymétrique afin de déterminer la valeur de la vitesse limite autorisée et de l'afficher en permanence au niveau du tableau de bord du véhicule.

Cette solution n'est pas satisfaisante car il est nécessaire d'adapter une prise tachymétrique au véhicule ou le dispositif à la prise tachymétrique prévue sur le véhicule. Or, en l'absence de normes communes, l'adaptation du dispositif aux différents modèles de véhicule ne permet pas d'avoir une solution économiquement viable.

Il subsiste donc un besoin pour un système de signalisation et de lecture d'informations destiné à un véhicule, simple et utilisable sur la plupart des véhicules.

C'est ce à quoi vise à répondre la présente invention en proposant un procédé de signalisation et de lecture d'informations destinées à un véhicule, permettant notamment de lire une signalisation de vitesse limite autorisée, de conception simple et fiable, susceptible de s'adapter sur la plupart des véhicules.

A cet effet, l'invention a pour objet un procédé de signalisation et de lecture d'au moins une information destinée à un véhicule circulant sur une voie au niveau de laquelle sont rapportées au moins deux marques (C1, C2) dont l'écartement D est fonction de ladite information à transmettre caractérisé en ce qu'il comprend les étapes suivantes :

- déterminer la durée T entre le temps de passage au dessus d'une des marques de deux points (L1, L2) solidaires du véhicule séparés d'une distance d selon le sens d'avancement du véhicule,
- calculer la vitesse Vr du véhicule, Vr étant égale à d/T,

- déterminer la durée T entre le temps de passage au dessus de la première marque et le temps de passage au dessus de la seconde marque d'un point solidaire du véhicule,
- déterminer l'information transmise en calculant $D=Vr \times T$. D'autres caractéristiques et avantages ressortiront de la description qui va suivre de l'invention, description donnée à titre d'exemple uniquement, en regard des dessins annexés sur lesquels :

  - les figures 1A à 1D représentent un synoptique illustrant le procédé de l'invention selon un premier mode de réalisation,
  - les figures 2A à 2H représentent un synoptique illustrant le procédé de l'invention selon un deuxième mode de réalisation, et
  - la figure 3 est une vue de dessus schématique d'une chaussée avec un véhicule équipé d'une variante du dispositif de l'invention.

Sur les différentes figures, on a représenté en 10 une chaussée sur laquelle est susceptible de circuler un véhicule 12.

Selon l'invention, deux marques C1 et C2 sont disposées au niveau de la chaussée 10 et deux capteurs L1 et L2, susceptibles de détecter lesdites marques, sont rapportés sur le véhicule 12.

Différentes technologies peuvent être utilisées pour le couple marque/capteur. Par exemple, une surface réfléchissante peut former la marque lorsque les capteurs sont de type optique. Selon une autre variante, une surface métallique ou métallisée peut former la marque lorsque le capteur est de type électromagnétique. Selon les cas, les marques peuvent être disposées au niveau de la surface ou sous la surface de la chaussée, à une profondeur autorisant la détection par un capteur.

Pour transmettre une information ou signalétique, notamment une vitesse limite autorisée, on utilise deux marques C1 et C2 séparées d'une distance D fonction de l'information à transmettre.

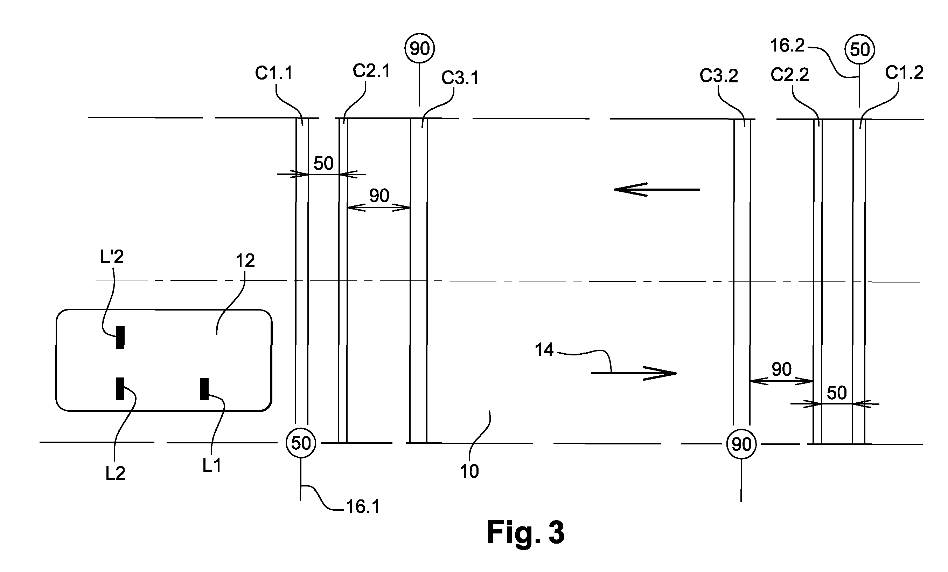

Selon un mode de réalisation préféré et illustré sur la figure 3, les marques C1 et C2 se présentent chacune sous la forme d'une bande sensiblement perpendiculaire à la direction de circulation des véhicules. A titre d'exemple, pour indiquer une vitesse limite autorisée de 30 Km/h, les bandes C1 et C2 sont distantes de 30 cm, pour une vitesse limite autorisée de 60 Km/h, les bandes C1 et C2 sont distantes de 60 cm, ainsi de suite.

Selon l'invention, les capteurs L1 et L2, solidaires du véhicule, sont séparés d'une distance d et sont susceptibles d'émettre un signal lorsqu'ils passent dans le voisinage d'une marque, notamment à l'aplomb d'une marque.

Le dispositif de l'invention comprend également des moyens susceptibles de calculer la vitesse limite autorisée à partir des signaux transmis par les capteurs L1 et L2, et de préférence, des moyens d'affichage de ladite vitesse au niveau du tableau de bord du véhicule ou au niveau du pare-brise. Ces moyens d'affichage sont bien connus de l'homme de l'art et sont généralement prévus à l'intérieur du véhicule.

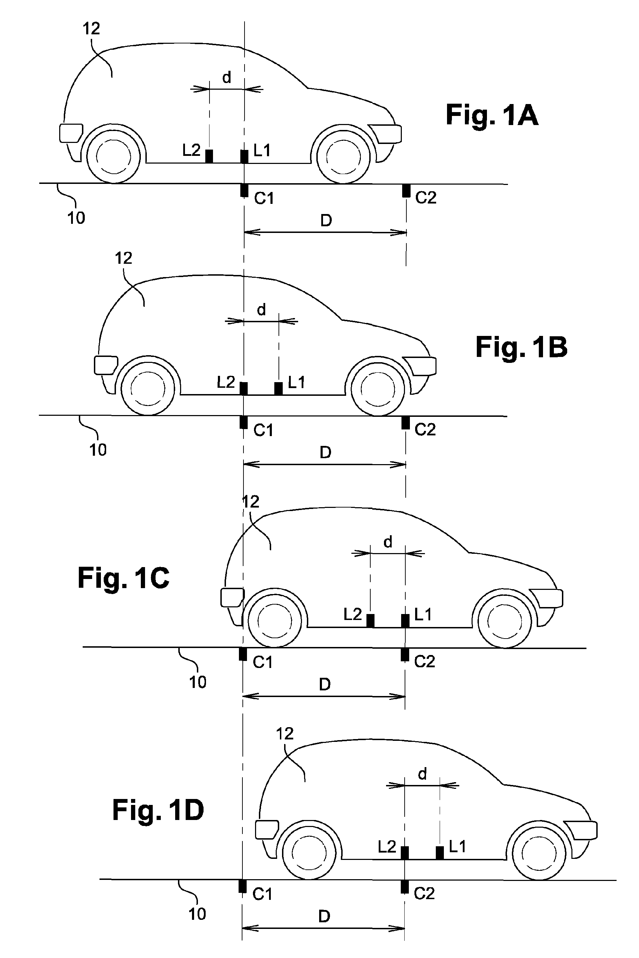

Le procédé de l'invention est maintenant décrit au regard des figures 1A à 1D.

Lorsque le capteur L1 détecte une marque C1, comme illustré sur la figure 1A, il émet un signal S1.

Lorsque le capteur L2 détecte la marque C1, comme illustré sur la figure 1B, il émet un signal S2.

Connaissant la distance d entre les capteurs C1 et C2, à partir de la durée T entre les signaux S1 et S2, on peut déterminer la vitesse réelle Vr du véhicule 12, Vr étant égale à d/T.

Lorsque le capteur L1 détecte une marque C2 comme illustré sur la figure 3, il émet un signal S3.

Lorsque le capteur L2 détecte la marque C2 comme illustré sur la figure 4, il émet un signal S4.

Connaissant la vitesse réelle Vr du véhicule, à partir de la durée T entre les signaux S3 et S1, on peut déterminer la distance D, D étant égale à VrxT.

La valeur D étant fonction de la vitesse limite autorisée, les moyens de calcul peuvent déterminer ladite vitesse limite autorisée.

En variante, on peut affiner la valeur de la vitesse réelle en utilisant la durée entre les signaux S3 et S4.

Le dispositif de l'invention est relativement simple à mettre en oeuvre et peut s'adapter à tous les types de véhicule car il ne nécessite pas de prise tachymétrique indépendante. Par ailleurs, le dispositif de l'invention ne prévoit que des éléments passifs au niveau de la chaussée et ne nécessite pas une infrastructure lourde à gérer.

Par ailleurs, le fait de calculer la vitesse au droit de chaque marque permet de faire une meilleure lecture de la distance entre les deux marques, de s'affranchir des régimes d'accélération et de décélération et éventuellement de moduler les informations et alertes transmises au conducteur en fonction desdits régimes.

Comme illustré sur la figure 3, les bandes C1 et C2 s'étendent sur toute la largeur de la chaussée sur les deux voies de circulation. Ainsi, même si le véhicule quitte sa voie, par exemple lors d'un dépassement, la vitesse limite autorisée peut être transmise car le véhicule passe au-dessus des bandes.

Selon une autre caractéristique, les marques C1 et C2 d'une même information ont des formes différentes, notamment des largeurs différentes, afin de déterminer si l'information concerne le véhicule, en fonction de son sens de circulation. Ainsi, selon une première variante, le dispositif de l'invention prend en compte l'information si la première marque C1 est plus large que la marque C2. A cet effet, au moins un des capteurs L1 ou L2 est susceptible de mesurer la largeur des marques.

Selon l'exemple de la figure 3, le véhicule 12 circule selon le sens matérialisé par la flèche 14. Au passage au dessus de l'information 16.1 matérialisée par les marques C1.1 et C2.1, le dispositif de l'invention prend en compte l'information et indique à l'automobiliste la vitesse limite autorisée, à l'occurrence 50 Km/h. Cette information est également transmise au conducteur même si ce dernier se déporte sur la voie de gauche lors d'un dépassement.

Dans ce sens de circulation, lorsque le véhicule passe au dessus de l'information 16.2 matérialisée par les marques C1.2 et C2.2, le dispositif de l'invention ne prend pas en compte cette information destinée à l'autre sens de circulation compte tenu de l'ordre de passage des marques.

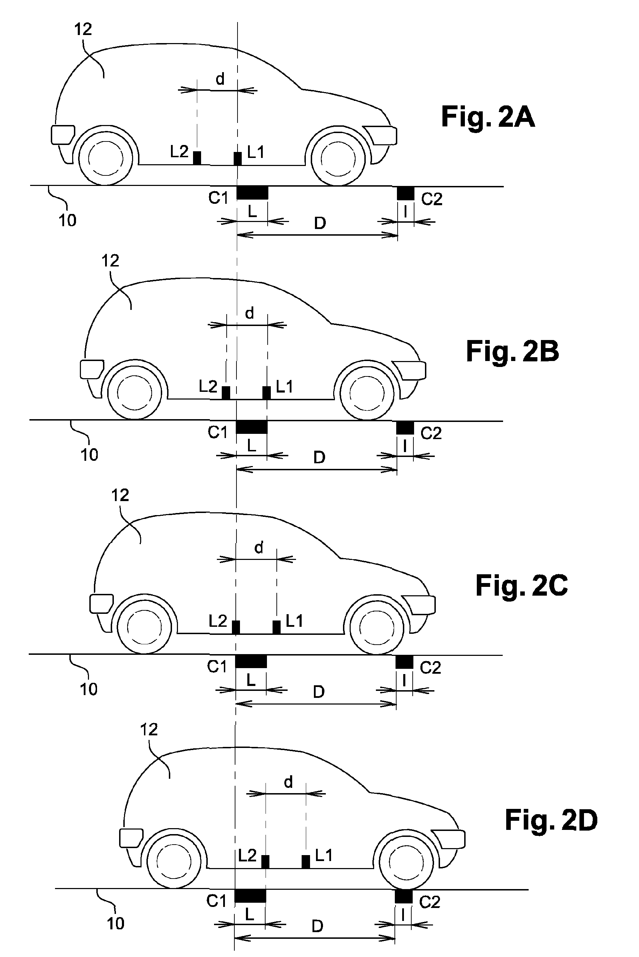

Cette variante de fonctionnement est maintenant décrite au regard des figures 2A à 2H.

Dans ce cas, les capteurs L1 et L2 sont susceptibles de détecter les bords des marques. A titre d'exemple, on utilise des capteurs optiques et des marques sous forme de bandes réfléchissantes.

Lorsque le capteur L1 passe au dessus du premier bord de la marque C1, comme illustré sur la figure 2A, il émet un signal S1.

Lorsque le capteur L1 passe au dessus du second bord de la marque C1, comme illustré sur la figure 2B, il émet un signal S2.

Lorsque le capteur L2 passe au dessus du premier bord de la marque C1, comme illustré sur la figure 2C, il émet un signal S3.

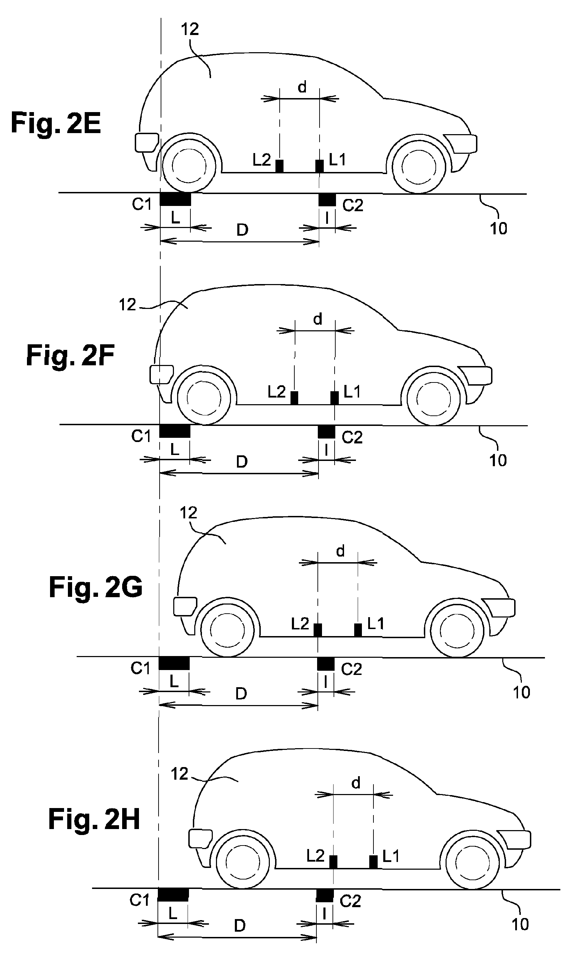

Lorsque le capteur L2 passe au dessus du second bord de la marque C1, comme illustré sur la figure 2D, il émet un signal S4.
Lorsque le capteur L1 passe au dessus du premier bord de la marque C2, comme illustré sur la figure 2E, il émet un signal S5.
Lorsque le capteur L1 passe au dessus du second bord de la marque C2, comme illustré sur la figure 2F, il émet un signal S6.
Lorsque le capteur L2 passe au dessus du premier bord de la marque C2, comme illustré sur la figure 2G, il émet un signal S7.
Lorsque le capteur L2 passe au dessus du second bord de la marque C2, comme illustré sur la figure 2H, il émet un signal S8.

Pour déterminer la largeur L de la bande C1, on utilise la formule suivante :

$$L = T_{(S2-S1)} \times d/T_{(S3-S1)}$$

avec $T_{(S2-S1)}$ la durée entre les signaux S1 et S2, et $T_{(S3-S1)}$ la durée entre les signaux S1 et S3.

Pour déterminer la largeur l de la bande C2, on utilise la formule suivante :

$$L = T_{(S6-S5)} \times d/T_{(S7-S5)}$$

avec $T_{(S6-S5)}$ la durée entre les signaux S5 et S6, et $T_{(S7-S5)}$ la durée entre les signaux S5 et S7.

Pour déterminer la vitesse Vr du véhicule on peut utiliser

$$Vr = d/ T_{(S3-S1)} \text{ ou } Vr=d/T_{(S7-S5)} \text{ ou}$$

calculer une moyenne $Vr= 1/2 \times [d/ T_{(S3-S1)} + d/T_{(S7-S5)}]$

Pour déterminer la distance D fonction de la vitesse limite autorisée, on utilise la formule suivante :

$$D = Vr \times T_{(S5-S1)} \text{ avec } T_{(S5-S1)} \text{ la durée entre les}$$

signaux S1 et S5.

Selon une autre caractéristique de l'invention, lorsque la fin de limitation pour une première voie correspond au début de la limitation pour l'autre voie et vice versa, on peut utiliser le même groupe de marques qui s'étendent sur toute la largeur de la chaussée pour transmettre des informations différentes en fonction du sens de circulation. Selon un mode de réalisation, la signalétique comprend trois bandes C1, C2, C3, la bande du milieu ayant une largeur différente et les bandes disposées de part et d'autre étant séparées de celle du milieu d'une distance correspondant à la vitesse limite autorisée du début de la zone pour l'une et d'une distance correspondant à la vitesse limite autorisée de la fin de la zone pour l'autre.

Selon une autre caractéristique de l'invention, le dispositif comprend au moins un autre capteur L'2 disposé à la même hauteur selon le sens d'avancement du véhicule mais de manière décalée selon une direction perpendiculaire audit sens d'avancement par rapport au capteur L1 et/ou L2. Cet agencement permet d'éviter les erreurs de lecture si la marque sous forme d'une bande est abîmée de manière localisée.

Selon une autre caractéristique de l'invention, la consigne de la vitesse limite autorisée est maintenue affichée jusqu'à la lecture d'une nouvelle consigne.

Selon une autre variante, une alarme sonore et/ou visuelle est émise lorsque la vitesse du véhicule est supérieure à la dernière consigne ou lorsque la nouvelle consigne correspond à une vitesse limite autorisée plus lente.

Au niveau des informations transmises, on peut à partir de deux marques successives obtenir une liste de messages codés, notamment la vitesse limite autorisée, en fonction de l'écartement entre lesdites deux marques.

En variante, on peut augmenter le nombre de messages codés, en faisant varier la largeur des bandes ou en utilisant une troisième marque, notamment pour différencier les informations destinées aux poids lourds et aux véhicules légers.

Bien entendu, l'invention n'est évidemment pas limitée au mode de réalisation représenté et décrit ci-dessus, mais en couvre au contraire toutes les variantes, notamment en ce qui concerne la technologie retenue pour les capteurs et les bandes. Enfin, le dispositif peut s'appliquer à d'autres types de transport terrestre tel que par exemple les trains.

## Revendications

1. Procédé de signalisation et de lecture d'au moins une information destinée à un véhicule circulant sur une voie au niveau de laquelle sont rapportées deux marques (C1, C2) dont l'écartement D est fonction de ladite information à transmettre **caractérisé en ce qu'**il comprend les étapes suivantes :

   - déterminer la durée T entre le temps de passage au dessus d'une des marques de deux points (L1, L2) solidaires du véhicule séparés d'une distance d selon le sens d'avancement du véhicule,
   - calculer la vitesse Vr du véhicule, Vr étant égale à d/T,
   - déterminer la durée T entre le temps de passage au dessus de la première marque et le temps de passage au dessus de la seconde marque d'un point solidaire du véhicule,
   - déterminer l'information transmise en calculant D=Vr $\times$ T.

2. Procédé selon la revendication 1, **caractérisé en ce qu'**il consiste à mesurer la largeur des marques (C1, C2) sous forme de bandes disposées en travers de la voie.

3. Procédé selon la revendication 2, **caractérisé en ce que** pour calculer la largeur d'une bande on détermine :

   - la durée T1 entre le temps de passage au dessus d'un des bords de la marque de deux points (L1, L2) solidaires du véhicule séparés d'une distance d selon le sens d'avancement du véhicule,
   - la durée T2 entre le temps de passage au dessus du premier bord de la marque et le temps de passage au dessus du second bord de la marque d'un point solidaire du véhicule,
      la largeur de la bande étant égale à T2 $\times$ d/T1.

4. Procédé selon l'une quelconque des revendications 1 à 3, **caractérisé en ce que** l'information transmise est maintenue affichée jusqu'à la lecture d'une nouvelle information transmise.

5. Dispositif de signalisation et de lecture d'au moins une information destinée à un véhicule circulant sur une voie au niveau de laquelle sont rapportées au moins deux marques (C1, C2) dont l'écartement D est fonction de ladite information à transmettre **caractérisé en ce qu'**il comprend deux capteurs (L1, L2), solidaires du véhicule, séparés d'une distance d selon le sens d'avancement du véhicule, des moyens pour déterminer la durée T entre le temps de passage au dessus d'une des marques des deux capteurs (L1, L2), des moyens de calcul de la vitesse Vr qui est égale à d/T, des moyens pour déterminer la durée T entre le temps de passage au dessus de la première marque et le temps de passage au dessus de la seconde marque d'un des capteurs (L1, L2), et des moyens de calcul de la distance D qui est égale à Vr $\times$ T.

6. Dispositif selon la revendication 5, **caractérisé en ce que** les marques (C1, C2) correspondant à une information se présentent sous forme de bandes de largeurs différentes et **en ce qu'**il comprend des moyens pour mesurer la largeur des bandes.

7. Dispositif selon la revendication 6 destiné à une chaussée comprenant au moins deux voies de circulation à contre sens, **caractérisé en ce que** les marques (C1, C2) s'étendent sur toute la largeur de la chaussée.

8. Dispositif pour véhicule susceptible de lire automatiquement au moins une information, destinée audit véhicule, matérialisée par au moins deux marques (C1, C2) dont l'écartement D est fonction de ladite information, **caractérisé en ce qu'**il comprend deux capteurs (L1, L2), solidaires du véhicule, séparés d'une distance d selon le sens d'avancement du véhicule, des moyens pour déterminer la durée T entre le temps de passage au dessus d'une des marques des deux capteurs (L1, L2), des moyens de calcul de la vitesse Vr qui est égale à d/T, des moyens pour déterminer la durée T entre le temps de passage au dessus de la première marque et le temps de passage au dessus de la seconde marque d'un des capteurs (L1, L2), et des moyens de calcul de la distance D qui est égale à Vr $\times$ T'.

9. Dispositif selon la revendication 8, **caractérisé en ce qu'**il comprend au moins un autre capteur (L'2) disposé à la même hauteur selon le sens d'avancement du véhicule mais de manière décalée selon une direction perpendiculaire audit sens d'avancement par rapport à au moins un des capteurs séparés de la distance d.

12

d

**Fig. 1A**

L2    L1

C1

10

D

12

d

**Fig. 1B**

L2    L1

C1    C2

10

D

12

d

**Fig. 1C**

L2    L1

C1    C2

10

D

12

d

**Fig. 1D**

L2    L1

C1    C2

10

D

Fig. 2A

Fig. 2B

Fig. 2C

Fig. 2D

**Fig. 2E**

**Fig. 2F**

**Fig. 2G**

**Fig. 2H**

EP 1 583 058 A1

C1.1    C2.1    90    C3.1    C3.2    C2.2    16.2    50    C1.2

50

90

L'2    12

90

14

90

50

50    16.1    L2    L1    10

**Fig. 3**

**Office européen des brevets**

**RAPPORT DE RECHERCHE EUROPEENNE**

Numéro de la demande

EP 05 30 0225

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | GB 1 534 729 A (TUFFET P) 6 décembre 1978 (1978-12-06) * page 3, ligne 25 - page 3, ligne 95 * ----- | 1-9 | G08G1/0967 G01S13/60 G01B11/04 |
| Y | FR 2 601 142 A (FLEITH ANDRE) 8 janvier 1988 (1988-01-08) * page 2, ligne 31 - page 4, ligne 10 * ----- | 1-9 | |
| Y | GB 2 201 784 A (BUSINESS & IND TECHNICAL SERVI) 7 septembre 1988 (1988-09-07) * page 3, alinéa 5 - page 3, dernier alinéa * * page 1, alinéa 3 - page 1, alinéa 5 * ----- | 1-9 | |
| Y | FR 2 599 166 A (CALECA ANNE MARIE ; FABRE MICHELE (FR); GIRAUD ROBERT (FR); FAYETTE CL) 27 novembre 1987 (1987-11-27) * page 13, dernier alinéa - page 16, dernier alinéa; figure 3 * ----- | 2 | |

DOMAINES TECHNIQUES RECHERCHES (Int.Cl.7)

G01P
G08G
G01B
G01S

Le présent rapport a été établi pour toutes les revendications

| Lieu de la recherche | Date d'achèvement de la recherche | Examinateur |
|---|---|---|
| Munich | 27 juin 2005 | Felicetti, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 30 0225

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-06-2005

| Document brevet cité au rapport de recherche | | Date de publication | Membre(s) de la famille de brevet(s) | | Date de publication |
|---|---|---|---|---|---|
| GB 1534729 | A | 06-12-1978 | FR | 2307272 A1 | 05-11-1976 |
| | | | CA | 1093657 A1 | 13-01-1981 |
| | | | CH | 609460 A5 | 28-02-1979 |
| | | | DE | 2615424 A1 | 14-10-1976 |
| | | | ES | 446820 A1 | 01-06-1977 |
| | | | IT | 1058798 B | 10-05-1982 |
| | | | JP | 51123599 A | 28-10-1976 |
| FR 2601142 | A | 08-01-1988 | FR | 2601142 A3 | 08-01-1988 |
| GB 2201784 | A | 07-09-1988 | AUCUN | | |
| FR 2599166 | A | 27-11-1987 | FR | 2599166 A1 | 27-11-1987 |

EPO FORM P0460

Pour tout renseignement concernant cette annexe : voir Journal Officiel de l'Office européen des brevets, No.12/82